(19) Europäisches Patentamt / European Patent Office / Office européen des brevets

(11) **EP 4 778 649 A1**

(12) **EUROPEAN PATENT APPLICATION**
published in accordance with Art. 153(4) EPC

(43) Date of publication:
**22.07.2026 Bulletin 2026/30**

(21) Application number: **24865461.8**

(22) Date of filing: **11.09.2024**

(51) International Patent Classification (IPC):
**B22F 1/00** (2022.01)          **B22F 10/28** (2021.01)
**B22F 10/34** (2021.01)        **B22F 10/38** (2021.01)
**B33Y 70/00** (2020.01)        **B33Y 80/00** (2015.01)
**C22C 38/00** (2006.01)        **C22C 38/14** (2006.01)
**C22C 38/52** (2006.01)        **C21D 9/00** (2006.01)

(52) Cooperative Patent Classification (CPC):
**B22F 1/00; B22F 10/28; B22F 10/34; B22F 10/38;
B33Y 70/00; B33Y 80/00; C22C 38/00;
C22C 38/14; C22C 38/52;** C21D 9/00; Y02P 10/25

(86) International application number:
**PCT/JP2024/032471**

(87) International publication number:
**WO 2025/057961 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023 JP 2023147734
23.07.2024 JP 2024117465**

(71) Applicant: **Sanyo Special Steel Co., Ltd.
Himeji-shi, Hyogo 672-8677 (JP)**

(72) Inventors:
• **HAGIYA, Toru
  Himeji-shi, Hyogo 672-8677 (JP)**
• **SAWADA, Toshiyuki
  Himeji-shi, Hyogo 672-8677 (JP)**

(74) Representative: **Müller-Boré & Partner
Patentanwälte PartG mbB
Friedenheimer Brücke 21
80639 München (DE)**

(54) **FE-BASED ALLOY POWDER FOR MOLDING AND MOLDED ARTICLE**

(57)    A purpose of the present invention is to provide an Fe-based alloy powder for shaping that has excellent cracking resistance and excellent mold performance by further improving the thermal conductivity of maraging steel, and in order to achieve this purpose, the present invention provides a Fe-based alloy powder for shaping, consisting of a Fe-based alloy, wherein the Fe-based alloy consists of, in mass%, Ni: 10.0 to 16.0%, Mo: 0.1 to 5.0%, Ti: 0.5 to 2.5%, Al: 0.01 to 1.0%, Si: more than 0 to 0.8%, Mn: more than 0 to 0.8%, Cr: 0 to 6.00%, C: 0 to 0.10%, Co: 0 to 0.90%, Nb: 0 to 2.00%, and the balance being Fe and unavoidable impurities, wherein a value M1 defined by Formula (1) is 13.0 or more, and wherein a value M2 defined Formula (2) is 17.0 or more.

$$M1 = [Ni] + 0.8[Cr] + 0.6[Mo] - 0.3[Ti] \qquad (1)$$

$$M2 = 41.9 - 0.9[Ni] - 2.0[Mo] - 2.1[Cr] \qquad (2)$$

EP 4 778 649 A1

[Figure 1]

**Description**

FIELD OF INVENTION

The present invention relates to a Fe-based alloy powder suitable for shaping methods such as a three-dimensional additive manufacturing method, a thermal spraying method, a laser coating method, a cladding method, and a hot isostatic pressing method, and to a shaped article (particularly an additively manufactured shaped article) produced by a shaping method using the Fe-based alloy powder.

BACKGROUND ART

A metallic shaped article has begun to be produced using a three-dimensional printer. The three-dimensional printer is a device that produces a shaped article by an additive manufacturing method, and representative systems of the additive manufacturing method include a powder bed system (powder bed fusion system) and a metal deposition method (a directed energy deposition system).

In the powder bed system, a laser beam or an electron beam is irradiated onto a portion of a metal powder that has been spread, and the irradiated portion of the spread powder is melted and solidified. Metal particles are bonded to each other due to melting and solidification. The beam is irradiated selectively onto a portion of the metal powder, and the non-irradiated portion of the powder does not melt. As a result, a bonding layer is formed only in the irradiated portion.

On the thus formed bonding layer, another layer of metal powder is spread, and a laser beam or an electron beam is irradiated onto the newly spread metal powder. As a result, metal particles are melted and solidified due to the irradiation, thereby forming a new bonding layer. The new bonding layer is also bonded to the existing bonding layer.

An assembly of bonding layers grows gradually as the operation of melting and solidifying metal particles by the irradiation is sequentially repeated. This growth gives a shaped article having a three-dimensional shape. The use of such a additive manufacturing method makes it possible to readily obtain a shaped article having a complex shape.

For example, Patent Document 1 discloses a method for producing a three-dimensional shaped article, the method including: a powder-layer forming step in which a powder obtained by mixing an iron-based powder with one or more powders selected from the group consisting of nickel, nickel-based alloys, copper, copper-based alloys, and graphite is used as a metal powder for metal laser shaping to form a powder layer; a sintered-layer forming step in which a beam is irradiated onto the powder layer to form a sintered layer; and a removal step in which the surface of a shaped article is cut, wherein a sintered layer is formed by repeating these steps, thereby producing a three-dimensional shaped article.

When an aluminum die-casting mold is produced by metal additive manufacturing, maraging steel and SKD61-type die steel are general-purposely used. Typical maraging steel contains substantially no C and contains alloying elements such as Ni, Mo, Ti, and Co (see Patent Documents 2 to 4).

Patent Document 2 discloses a Fe-based metal powder for shaping, the powder consisting of Ni: 15.0 to 21.0%, Co: 0.5% or less, Mo: 7.0% or less, Ti: 0.1 to 6.0%, Al: 0.1 to 3.0%, and the balance Fe and unavoidable impurities.

Patent Document 3 discloses an alloy powder for additive manufacturing, the powder having a median diameter D50 of 200 μm or less, and consisting of maraging steel whose main component is Fe and which contains Ni: 14 to 22%, Co: 0 to 5%, Mo: 0.1 to 15%, Ti: 0.1 to 5%, Al: 3% or less, and the balance Fe and unavoidable impurities.

Patent Document 4 discloses a metal powder material for metal additive manufacturing of a steel material equivalent to maraging steel, the material being obtained by mixing powders of multiple types of alloys having compositions of Fe: 76% or more, C: 0.03% or less, Si: 0.12% or less, Mn: 0.12% or less, Ni: 17 to 19%, Mo: 1.5 to 2.5%, Ti: 0.5 to 2.0%, and Al: 1.08 to 1.5%.

CITATION LIST

PATENT DOCUMENTS

[Patent Document 1] Japanese Unexamined Patent Application Publication No. 2008-81840
[Patent Document 2] Japanese Patent No. 6703511
[Patent Document 3] Japanese Unexamined Patent Application Publication No. 2020-45567
[Patent Document 4] Japanese Patent No. 6692339

SUMMARY OF INVENTION

TECHNICAL PROBLEM

When an aluminum die-casting mold is produced by metal additive manufacturing, maraging steel and SKD61-type die steel have conventionally been used as the materials. In metal additive manufacturing materials for an aluminum die-casting mold, excellent thermal conductivity for improving mold cooling efficiency and resistance to cracking during shaping in metal additive manufacturing are required. In the present specification, the term "cracking during shaping" refers to a crack that occurs in the shaped article itself (particularly in a portion that becomes a notch) and/or at the interface between the shaped article and the base material for shaping, due to thermal stress or the like associated with rapid melting and rapid solidification during shaping.

However, SKD61-type die steel has excellent thermal conductivity but is susceptible to cracking during shaping due to thermal stress. On the other hand, maraging steel is soft during shaping and therefore less likely to cause cracking during shaping, but because it contains many alloying elements, its thermal conductivity is low, and its performance when used as a mold tends to be inferior to that of conventional die steel.

Accordingly, a problem to be solved by the present invention is to provide a Fe-based alloy powder for shaping (particularly a Fe-based alloy powder for additive manufacturing) that has excellent resistance to cracking during shaping (high toughness) and excellent mold performance by further improving the thermal conductivity of maraging steel, and to provide a shaped article (particularly an additively manufactured shaped article) produced by a shaping method using the Fe-based alloy powder.

SOLUTION TO PROBLEM

As a result of extensive studies, the present inventors have found that it is useful to define the composition of maraging steel and to define a value M1 defined by Formula (1), which is an index of hardenability, and a value M2 defined by Formula (2), which is an index of thermal conductivity. Specifically, the present inventors have found that, when the value M1 defined by Formula (1): M1 = [Ni] + 0.8[Cr] + 0.6[Mo] - 0.3[Ti] satisfies 13.0 or more, a martensitic structure can be obtained during shaping, and that, when the value M2 defined by Formula (2): M2 = 41.9 - 0.9[Ni] - 2.0[Mo] - 2.1[Cr] satisfies 17.0 or more, the thermal conductivity can be increased.

In general-purpose maraging steel for cast materials (representative composition: Fe-18.5%Ni-9%Co-5% Mo-0.6%Ti-0.1%Al), a large amount of alloying elements is added in order to ensure hardenability so that martensitic transformation occurs upon air cooling after solution treatment. In such general-purpose maraging steel, the value M1 is 21.3 and the value M2 is 15.3. In general-purpose maraging steel, although the value M1 is significantly higher than 13.0, the value M2, which is an index of thermal conductivity, is less than 17.0. Accordingly, general-purpose maraging steel has a composition system different from that of the Fe-based alloy of the present invention and has insufficient thermal conductivity.

Therefore, the present inventors have focused on the fact that the cooling rate during rapid cooling and solidification in metal additive manufacturing is faster than that in quenching in conventional processes, and have found that, even with the addition of a smaller amount of alloying elements (M1 ≥ 13.0) than in general-purpose maraging steel, a martensitic structure can be obtained in metal additive manufacturing. The present inventors have also found that, because the amount of alloying elements can be reduced compared with general-purpose maraging steel, a higher thermal conductivity than that of general-purpose maraging steel can be obtained. Furthermore, the present inventors have found that a shaped article having a larger full width at half maximum (FWHM) of the peak of the (110) plane of bcc iron in an X-ray diffraction pattern of the shaped article measured using Cu K$\alpha$ radiation, and thus having a higher dislocation density, exhibits higher toughness.

Thus, the present invention encompasses the following inventions.

[1] A Fe-based alloy powder for shaping, consisting of a Fe-based alloy,
wherein the Fe-based alloy consists of, in mass%:

Ni: 10.0 to 16.0%;
Mo: 0.1 to 5.0%;
Ti: 0.5 to 2.5%;
Al: 0.01 to 1.0%;
Si: more than 0 to 0.8%;
Mn: more than 0 to 0.8%;
Cr: 0 to 6.00%;
C: 0 to 0.10%;
Co: 0 to 0.90%;
Nb: 0 to 2.00%; and

the balance being Fe and unavoidable impurities,
wherein a value M1 is 13.0 or more,
wherein the value M1 is defined by Formula (1):

$$M1 = [Ni] + 0.8[Cr] + 0.6[Mo] - 0.3[Ti] \qquad (1),$$

wherein, in Formula (1), [Ni], [Cr], [Mo], and [Ti] respectively represent contents (mass%) of Ni, Cr, Mo, and Ti in the Fe-based alloy,
wherein a value M2 is 17.0 or more,
wherein the value M2 is defined by Formula (2):

$$M2 = 41.9 - 0.9[Ni] - 2.0[Mo] - 2.1[Cr] \qquad (2),$$

and
wherein, in Formula (2), [Ni], [Mo], and [Cr] respectively represent contents (mass%) of Ni, Mo, and Cr in the Fe-based alloy.

[2] The Fe-based alloy powder for shaping according to [1], wherein the Fe-based alloy contains one or more selected from the group consisting of Cr: more than 0 to 6.00%, C: 0.01 to 0.10%, Co: 0.01 to 0.90%, and Nb: 0.01 to 2.00%.
[3] A shaped article produced by a shaping method using the Fe-based alloy powder for shaping according to [1] or [2].
[4] The shaped article according to [3], wherein, in an X-ray diffraction pattern of the shaped article measured using Cu Kα radiation, the full width at half maximum of the peak of the (110) plane of bcc iron is 0.140° or more.
[5] The shaped article according to [3] or [4], wherein the shaped article is an additively manufactured shaped article.

ADVANTAGEOUS EFFECTS OF INVENTION

By a shaping method (particularly an additive manufacturing method) using the Fe-based alloy powder of the present invention, a shaped article (particularly an additively manufactured shaped article) can be appropriately obtained, and a shaped article consisting of a mold steel having both a thermal conductivity of 17.0 W/m/K or more and a Charpy impact value of 20.0 J/cm² or more, that is, having both high thermal conductivity and high toughness, can be obtained. In the present specification, the term "mold steel" refers to an alloy steel suitable for a mold, and examples of the mold include a die-casting mold such as an aluminum die-casting mold.
In addition, in the X-ray diffraction pattern of a shaped article measured using Cu Kα radiation, when the full width at half maximum (FWHM) of the peak of the (110) plane of bcc iron is 0.140° or more, the toughness of the shaped article can be improved, and a shaped article (particularly an additively manufactured shaped article) consisting of a mold steel having higher toughness in addition to high thermal conductivity can be obtained. Specifically, when the FWHM value is 0.140° or more, the Charpy impact value becomes 20.0 J/cm² or more; when the FWHM value is 0.145° or more, the Charpy impact value becomes 25.0 J/cm² or more; when the FWHM value is 0.150° or more, the Charpy impact value becomes 30.0 J/cm² or more; and when the FWHM value is 0.153° or more, the Charpy impact value becomes 35.0 J/cm² or more. Thus, a shaped article (particularly an additively manufactured shaped article) consisting of a mold steel having higher toughness in addition to high thermal conductivity can be obtained.

BRIEF DESCRIPTION OF DRAWINGS

Figure 1 is a graph showing the relationship between the Charpy impact value and the value M1, in which the vertical axis represents the Charpy impact value and the horizontal axis represents the value M1 defined by Formula (1).
Figure 2 is a graph showing the relationship between the thermal conductivity and the value M2, in which the vertical axis represents the thermal conductivity and the horizontal axis represents the value M2 defined by Formula (2).

DETAILED DESCRIPTION OF INVENTION

<Fe-based alloy powder>

One aspect of the present invention relates to a Fe-based alloy powder. The Fe-based alloy powder of the present invention can be used as a material for shaping (particularly additive manufacturing), that is, as a Fe-based alloy powder for shaping (particularly a Fe-based alloy powder for additive manufacturing).

[Fe-based alloy]

The Fe-based alloy powder of the present invention consists of a Fe-based alloy (hereinafter referred to as "the Fe-based alloy of the present invention"). The reasons for defining the essential components (Ni, Mo, Ti, Al, Si, and Mn) and the optional components (Cr, C, Co, and Nb) of the Fe-based alloy of the present invention will be described below. The symbol "%" for the content of each component refers to % by mass. The balance other than the essential components and the optional components is Fe and unavoidable impurities.

Ni: 10.0 to 16.0%

Ni is a component that forms intermetallic compounds with Mo, Ti, and Al, thereby enabling the formation of a shaped article having excellent strength. Ni is also an element necessary for forming martensite in order to improve hardenability. From these viewpoints, the lower limit of the Ni content is set to 10.0% or more. The lower limit of the Ni content is preferably 12.0% or more, more preferably 12.5% or more, and even more preferably 12.9% or more. The lower limit of the Ni content may be, for example, 13.0% or more. On the other hand, since Ni is an element that forms an austenite phase, excessive addition of Ni suppresses martensitic transformation, making it difficult to form a martensitic phase. In addition, as the Ni content increases, the thermal conductivity decreases. From these viewpoints, the upper limit of the Ni content is set to 16.0% or less. The upper limit of the Ni content is preferably 15.5% or less, more preferably 15.1% or less. The upper limit of the Ni content may be, for example, 15.0% or less or 14.9% or less. Each of the above-described lower limits of the Ni content may be combined with any of the above-described upper limits of the Ni content, insofar as they are combinable.

Mo: 0.1 to 5.0%

Mo is a component that forms intermetallic compounds with Fe and ensures strength. Mo is also a component for forming martensite in order to improve hardenability. From these viewpoints, the lower limit of the Mo content is set to 0.1% or more. The lower limit of the Mo content is preferably 0.8% or more, more preferably 0.9% or more, and even more preferably 1.0% or more. The lower limit of the Mo content may be, for example, 1.5% or more, 1.7% or more, or 1.9% or more. On the other hand, excessive addition of Mo decreases thermal conductivity. From this viewpoint, the upper limit of the Mo content is set to 5.0% or less. The upper limit of the Mo content may be, for example, 4.5% or less, 4.0% or less, 3.5% or less, or 3.0% or less. Each of the above-described lower limits of the Mo content may be combined with any of the above-described upper limits of the Mo content, insofar as they are combinable.

Al: 0.01 to 1.0%

Al is a component that forms intermetallic compounds with Ni and enables the formation of a shaped article having excellent strength and oxidation resistance. From this viewpoint, the lower limit of the Al content is set to 0.01% or more. The lower limit of the Al content is preferably 0.03% or more, more preferably 0.05% or more, and even more preferably 0.07% or more. The lower limit of the Al content may be, for example, 0.1% or more, 0.2% or more, 0.3% or more, 0.4% or more, or 0.5% or more. On the other hand, excessive addition of Al tends to cause hot cracking in the rapid melting and rapid solidification process. From this viewpoint, the upper limit of the Al content is set to 1.0% or less. The upper limit of the Al content is preferably 0.8% or less, more preferably 0.7% or less, and even more preferably 0.6% or less. Each of the above-described lower limits of the Al content may be combined with any of the above-described upper limits of the Al content, insofar as they are combinable.

Ti: 0.5 to 2.5%

Ti is a component that forms intermetallic compounds with Ni and enables the formation of a shaped article having excellent strength. From this viewpoint, the lower limit of the Ti content is set to 0.5% or more. The lower limit of the Ti content is preferably 1.0% or more, more preferably 1.3% or more, and even more preferably 1.4% or more. On the other hand, when a large amount of Ti is added, the formation of martensite is suppressed and the formation of bainite is promoted. From this viewpoint, the upper limit of the Ti content is set to 2.5% or less. The upper limit of the Ti content is preferably 2.1% or less, and more preferably 2.0% or less. The upper limit of the Ti content may be, for example, 1.6% or less. Each of the above-described lower limits of the Ti content may be combined with any of the above-described upper limits of the Ti content, insofar as they are combinable.

Si: more than 0 to 0.8%

Si is a component that dissolves in the matrix and increases hardness. Si also has the effect of improving softening resistance. On the other hand, when the Si content becomes too high, thermal conductivity decreases. From these viewpoints, the Si content is set to more than 0% and 0.8% or less. The upper limit of the Si content is preferably 0.5% or less, more preferably 0.4% or less, and even more preferably 0.3% or less. The upper limit of the Si content may be, for example, 0.2% or less or 0.1% or less. The lower limit of the Si content is preferably 0.01% or more, and more preferably 0.02% or more. The lower limit of the Si content may be, for example, 0.03% or more, 0.04% or more, or 0.05% or more. Each of the above-described lower limits of the Si content may be combined with any of the above-described upper limits of the Si content, insofar as they are combinable.

Mn: more than 0 to 0.8%

Mn is a component that improves hardenability and suppresses the decrease in toughness caused by the formation of bainite. Mn also has the effect of improving softening resistance. On the other hand, when the Mn content becomes too high, Mn dissolves into the matrix and decreases the thermal conductivity of a shaped article. From these viewpoints, the Mn content is set to more than 0% and 0.8% or less. The upper limit of the Mn content is preferably 0.7% or less, more preferably 0.6% or less, and even more preferably 0.5% or less. The upper limit of the Mn content may be, for example, 0.4% or less, 0.3% or less, 0.2% or less, or 0.1% or less. The lower limit of the Mn content is preferably 0.01% or more, and more preferably 0.02% or more. The lower limit of the Mn content may be, for example, 0.03% or more, 0.04% or more, or 0.05% or more. Each of the above-described lower limits of the Mn content may be combined with any of the above-described upper limits of the Mn content, insofar as they are combinable.

The Fe-based alloy of the present invention may further contain, in addition to the above essential elements, one or two or more additional components selected from Cr, C, Co, and Nb.

Cr: 0 to 6.00%

Cr is an optional additional component, and the Cr content may be 0% or more than 0%. Cr is a useful component for forming martensite in order to improve hardenability. From this viewpoint, when Cr is added, the lower limit of the Cr content is preferably 0.10% or more, more preferably 0.20% or more, and even more preferably 0.30% or more. On the other hand, since Cr is an element that forms an austenite phase, when a large amount of Cr is added, martensitic transformation is suppressed, making it difficult to form a martensitic phase. In addition, as the Cr content increases, thermal conductivity decreases. From these viewpoints, the upper limit of the Cr content is set to 6.00% or less. The upper limit of the Cr content is preferably 5.00% or less, more preferably 4.50% or less, and even more preferably 4.10% or less. The upper limit of the Cr content may be, for example, 4.00% or less, 3.00% or less, or 2.00% or less. Each of the above-described lower limits of the Cr content may be combined with any of the above-described upper limits of the Cr content, insofar as they are combinable.

Co: 0 to 0.90%

Co is an optional additional component, and the Co content may be 0% or more than 0%. Co is a component that forms an austenite phase. From this viewpoint, when Co is added, the lower limit of the Co content is preferably 0.01% or more, more preferably 0.02% or more, even more preferably 0.03% or more, and even more preferably 0.04% or more. On the other hand, when the Co content is high, the formation of a martensite phase becomes difficult. From this viewpoint, when Co is added, the upper limit of the Co content is set to 0.90% or less. The upper limit of the Co content is preferably 0.70% or less, more preferably 0.60% or less, and even more preferably 0.50% or less. The upper limit of the Co content may be, for example, 0.40% or less, 0.30% or less, 0.20% or less, or 0.10% or less. Each of the above-described lower limits of the Co content may be combined with any of the above-described upper limits of the Co content, insofar as they are combinable.

C: 0 to 0.10%

C is an optional additional component, and the C content may be 0% or more than 0%. When C is added, hardenability can be improved without increasing the hardness of an as-built shaped article. From this viewpoint, when C is added, the lower limit of the C content is preferably 0.01% or more, more preferably 0.02% or more, even more preferably 0.03% or more, and even more preferably 0.04% or more. On the other hand, when the C content exceeds 0.10%, the hardness of an as-built shaped article increases, making cracking during shaping more likely to occur. From this viewpoint, when C is added, the upper limit of the C content is set to 0.10% or less. The upper limit of the C content is preferably 0.07% or less, more preferably 0.06% or less, and even more preferably 0.05% or less. The upper limit of the C content may be, for example, 0.04% or less or 0.03% or less. Each of the above-described lower limits of the C content may be combined with any of the above-described upper limits of the C content, insofar as they are combinable.

Nb: 0 to 2.00%

Nb is an optional additional component, and the Nb content may be 0% or more than 0%. Nb has an effect of refining crystal grains and is a useful component for ensuring strength. From this viewpoint, when Nb is added, the lower limit of the Nb content is preferably 0.01% or more, more preferably 0.50% or more, and even more preferably 1.00% or more. On the other hand, when a large amount of Nb is added, toughness decreases. From this viewpoint, when Nb is added, the upper limit of the Nb content is set to 2.00% or less. The upper limit of the Nb content is preferably 1.50% or less. Each of the above-described lower limits of the Nb content may be combined with any of the above-described upper limits of the Nb content, insofar as they are combinable.

The reasons for defining the value M1 defined by Formula (1), and the value M2 defined by Formula (2) in the Fe-based alloy of the present invention will be described below.

Indicator of hardenability: M1 value of 13.0 or more

The value M1 is defined by Formula (1):

$$M1 = [Ni] + 0.8[Cr] + 0.6[Mo] - 0.3[Ti] \qquad (1)$$

wherein, in Formula (1), [Ni], [Cr], [Mo], and [Ti] respectively represent the contents (mass%) of Ni, Cr, Mo, and Ti in the Fe-based alloy of the present invention.

The value M1 is an indicator related to hardenability. When the value M1 is 13.0 or more, a martensitic structure can be obtained. The higher the hardenability, the more easily a martensitic structure is formed. When the value M1 falls below 13.0, a bainitic structure is formed, resulting in deterioration of toughness. Accordingly, the lower limit of the value M1 is set to 13.0 or more. The lower limit of the value M1 is preferably 13.5 or more, more preferably 14.0 or more, even more preferably 15.0 or more, even more preferably 15.3 or more, and even more preferably 15.6 or more. The upper limit of the value M1 is preferably 17.0 or less, and more preferably 16.0 or less. The value M1 may be, for example, 15.9 or less, 15.8 or less, 15.7 or less, 15.4 or less, or 15.3 or less. Each of the above-described lower limits of the value M1 may be combined with any of the above-described upper limits of the value M1, insofar as they are combinable.

Indicator of thermal conductivity: M2 value of 17.0 or more

The value M2 is defined by Formula (2):

$$M2 = 41.9 - 0.9[Ni] - 2.0[Mo] - 2.1[Cr] \qquad (2)$$

wherein, in Formula (2), [Ni], [Mo], and [Cr] respectively represent the contents (mass%) of Ni, Mo, and Cr in the Fe-based alloy of the present invention.

The value M2 is an indicator related to thermal conductivity. When the value M2 is 17.0 or more, a thermal conductivity of 17.0 W/K/m or more can be obtained. When the value M2 is less than 17.0, thermal conductivity deteriorates. Accordingly, the lower limit of the value M2 is set to 17.0 or more. The lower limit of the value M2 is preferably 20.0 or more, more preferably 22.0 or more, and even more preferably 23.5 or more. The upper limit of the value M2 is preferably 27.0 or less, more preferably 26.5 or less, and even more preferably 26.0 or less. The upper limit of the value M2 may be, for example, 25.9 or less, 24.1 or less, or 22.0 or less. Each of the above-described lower limits of the value M2 may be combined with any of the above-described upper limits of the value M2, insofar as they are combinable.

[Method for producing Fe-based alloy powder]

Examples of the method for producing the Fe-based alloy powder include a water atomizing method, a single-roll rapid colling method, a twin-roll rapid cooling method, a gas atomizing method, a disk atomizing method, and a centrifugal atomizing method. Preferred production methods are the single-roll rapid colling method, the gas atomizing method, and the disk atomizing method. The Fe-based alloy powder may also be subjected to mechanical milling or the like. Examples of the milling method include a ball milling method, a bead milling method, a planetary ball milling method, an attritor milling method, and a vibration ball milling method.

Since the Fe-based alloy powder used in shaping (particularly additive manufacturing) is preferably spherical or nearly spherical, excellent in flowability, and capable of being densely packed without gaps, the Fe-based alloy powder of the present invention is preferably a gas-atomized powder. Accordingly, in the Examples described later, a gas-atomized powder was used.

<Shaped article>

One aspect of the present invention relates to a shaped article. The shaped article of the present invention is a shaped article produced by a shaping method using the Fe-based alloy powder of the present invention. The shaped article of the present invention is preferably an additively manufactured shaped article produced by an additive manufacturing method using the Fe-based alloy powder of the present invention. The shaped article of the present invention preferably consists of the Fe-based alloy of the present invention in the same manner as the Fe-based alloy powder of the present invention. After shaping, the shaped article of the present invention becomes a mold by being subjected to one or more desired post-processes (for example, quenching, tempering, aging heat treatment, cutting, etc.). Examples of the mold include a die-casting mold such as an aluminum die-casting mold.

[Shaping method]

Examples of the shaping method (the method for producing the shaped article) include a rapid melting and rapid solidification process in which the Fe-based alloy powder of the present invention is melted and solidified. Specific examples of this process include an additive manufacturing method (three-dimensional additive manufacturing method), a thermal spraying method, a laser coating method, and a cladding method. The shaping method is preferably the additive manufacturing method. Specific examples of the additive manufacturing method include a powder bed fusion system (powder bed system) and a directional energy deposition system (powder deposition system). Specific examples of the powder bed fusion system (powder bed system) include a selective laser sintering (SLS) system, a selective laser melting (SLM) system, and an electron beam melting (EBM) system. The Fe-based alloy powder of the present invention is suitable for the additive manufacturing method, particularly the additive manufacturing method of the powder bed fusion system. By the additive manufacturing method, particularly the additive manufacturing method of the powder bed fusion system, a large-sized additively manufactured shaped article with high density can be formed.

The additive manufacturing method can be performed using, for example, a 3D printer. In the additive manufacturing method of the powder bed fusion system (powder bed system), the Fe-based alloy powder of the present invention is bedded and irradiated with a laser beam or an electron beam. The irradiation allows particles to be rapidly heated and rapidly molten. The particles molten are then rapidly solidified. The melting and solidification allow the particles to be bonded. The irradiation is selectively applied to one portion of the Fe-based alloy powder bedded. A portion of the powder bedded, not irradiated, is not molten. A bonding layer is formed only in the portion irradiated.

The Fe-based alloy powder of the present invention is further bedded thinly on the bonding layer. One portion of this Fe-based alloy powder is irradiated with a laser beam or an electron beam. The irradiation allows particles to be rapidly molten. The particles molten are then rapidly solidified. The melting and solidification allow the particles in the powder to be bonded, and a new bonding layer is formed. This new bonding layer is also bonded with the existing bonding layer.

By repeatedly bonding through irradiation, an aggregate of bonding layers gradually grows. This growth allows a shaped article having a three-dimensional shape to be obtained. This additive manufacturing method allows a shaped article having a complicated shape to be easily obtained.

[Aging heat treatment]

A shaped article produced by a shaping method using the Fe-based alloy powder of the present invention (hereinafter referred to as the "non-heat-treated shaped article") is preferably used after being subjected to aging heat treatment, rather than being used as-is. After the aging heat treatment, the non-heat-treated shaped article is, for example, air-cooled. By performing the aging heat treatment on the non-heat-treated shaped article, a shaped article (particularly an additively manufactured shaped article) having desired properties can be obtained. It should be noted that solution treatment of the non-heat-treated shaped article is not particularly required, and therefore energy costs can be reduced.

By performing the aging heat treatment on the non-heat-treated shaped article within an appropriate temperature range, a microstructure in which intermetallic compounds such as $Ni_3Mo$ and $Ni_3Al$ are sufficiently precipitated can be obtained. In addition, dissolution of alloying elements into the matrix phase is suppressed. Furthermore, grain coarsening is suppressed. The temperature for the aging heat treatment is preferably 450°C to 630°C, more preferably 470°C to 600°C, and even more preferably 510°C to 570°C. The time for the aging heat treatment is preferably 0.5 to 10 hours, more preferably 1 to 8 hours, and even more preferably 3 to 5 hours.

[Indicator of dislocation density: FWHM value of 0.140° or more]

The full width at half maximum (FWHM) of a peak in an X-ray diffraction (XRD) pattern refers to the width of the peak (difference in the 2θ angle) at one-half of the peak intensity. In the "XRD pattern", the horizontal axis represents 2θ and the vertical axis represents intensity. The "peak intensity" refers to the value obtained by subtracting the background intensity from the peak-top intensity (that is, the height from the baseline to the peak top). The "peak top" refers to the peak apex showing the maximum intensity. X-ray diffraction can be performed using a commercially available X-ray diffractometer. The measurement conditions for X-ray diffraction may be those described in the Examples. Using software attached to a commercially available X-ray diffractometer, the full width at half maximum of the target peak can be measured after performing background (baseline) removal and peak separation on the XRD pattern obtained by X-ray diffraction analysis. Peak separation can be performed by fitting using a fitting function such as a Lorentz function.

It is generally known that the higher the dislocation density (the total length of dislocation lines present per unit volume of a crystal), the larger the value of the full width at half maximum becomes. Therefore, as an indicator of the dislocation density, the full width at half maximum (FWHM) of the peak of the (110) plane of bcc iron (a peak having a peak top near 2θ = 44 to 45°) in the XRD pattern of a shaped article (particularly an additively manufactured shaped article) is quantified by fitting with a Lorentz function.

Since peaks in the XRD pattern obtained using Cu Kα radiation may broaden due to instrumental resolution, the full width at half maximum of the peak of the (110) plane of bcc iron is corrected using $LaB_6$ powder as a standard sample in order to remove the influence of instrumental resolution. Specifically, the full width at half maximum of the (110) plane of bcc iron is evaluated using the FWHM corrected by the following formula:

(Corrected FWHM) = (FWHM of measured sample) - (FWHM of $LaB_6$ powder)

By increasing the dislocation density, a martensitic structure rather than a bainitic structure can be obtained, thereby improving toughness. From these viewpoints, in the XRD pattern of the shaped article (particularly an additively manufactured shaped article) of the present invention, the FWHM of the peak of the (110) plane of bcc iron is preferably 0.140° or more, more preferably 0.145° or more, even more preferably 0.150° or more, and even more preferably 0.153° or more. The upper limit of the FWHM is, for example, 0.170° or less, 0.165° or less, or 0.160° or less. The phrase "FWHM of the peak of the (110) plane of bcc iron in the XRD pattern of the shaped article of the present invention" refers to the FWHM corrected by the above formula. The XRD pattern of the shaped article of the present invention is measured using a sample obtained from the non-heat-treated shaped article before aging heat treatment.

EXAMPLES

[Production of powder]

Steels having the chemical compositions of Examples 1 to 11 shown in Table 1 were each gas-atomized to obtain Fe-based alloy powders. In addition, steels having the chemical compositions of Comparative Examples 1 to 4 shown in Table 1 were gas-atomized to obtain Fe-based alloy powders. In Table 1, "Bal." indicates the balance.

Specifically, in a vacuum atmosphere, raw materials having the predetermined compositions shown in Table 1 were heated and melted by high-frequency induction heating in an alumina crucible. The molten metal was then dropped through a nozzle of 5 mm diameter located below the crucible. Next, argon gas was sprayed onto the molten metal to obtain a Fe-based alloy powder. The obtained Fe-based alloy powder was classified to remove particles having a diameter exceeding 63 μm, thereby obtaining a Fe-based alloy powder for additive manufacturing.

[Table 1]

|  | Fe | Ni | Mo | Ti | Al | Cr | Nb | Si | Mn | Co | C | M1 | M2 |
|---|---|---|---|---|---|---|---|---|---|---|---|---|---|
| Example 1 | Bal. | 13.01 | 2.11 | 2.03 | 0.09 | 0 | 0 | 0.03 | 0.02 | 0 | 0 | 13.7 | 26.0 |
| Example 2 | Bal. | 13.04 | 4.92 | 2.08 | 0.08 | 0 | 0 | 0.02 | 0.02 | 0 | 0 | 15.4 | 20.3 |
| Example 3 | Bal. | 14.99 | 2.14 | 1.52 | 0.09 | 0 | 0 | 0.02 | 0.05 | 0 | 0 | 15.8 | 24.1 |
| Example 4 | Bal. | 13.07 | 2.14 | 1.53 | 0.09 | 0 | 0 | 0.02 | 0.02 | 0 | 0 | 13.9 | 25.9 |
| Example 5 | Bal. | 12.98 | 2.08 | 1.56 | 0.07 | 4.01 | 0 | 0.05 | 0.03 | 0 | 0 | 17.0 | 17.6 |
| Example 6 | Bal. | 12.97 | 2.09 | 1.59 | 0.09 | 0 | 0 | 0.04 | 0.05 | 0 | 0.05 | 13.7 | 26.0 |
| Example 7 | Bal. | 14.91 | 2.13 | 1.47 | 0.09 | 0 | 0 | 0.02 | 0.50 | 0 | 0 | 15.7 | 24.2 |

(continued)

|  | Fe | Ni | Mo | Ti | Al | Cr | Nb | Si | Mn | Co | C | M1 | M2 |
|---|---|---|---|---|---|---|---|---|---|---|---|---|---|
| Example 8 | Bal. | 15.07 | 2.14 | 1.52 | 0.07 | 0 | 0 | 0.30 | 0.03 | 0 | 0 | 15.9 | 24.1 |
| Example 9 | Bal. | 15.03 | 2.15 | 1.54 | 0.09 | 0 | 0 | 0.02 | 0.03 | 0.5 | 0 | 15.9 | 24.1 |
| Example 10 | Bal. | 15.06 | 1.10 | 1.49 | 0.09 | 0 | 1 | 0.02 | 0.05 | 0 | 0 | 15.3 | 26.1 |
| Example 11 | Bal. | 14.94 | 2.10 | 1.47 | 0.51 | 0 | 0 | 0.02 | 0.02 | 0 | 0 | 15.8 | 24.3 |
| Comparative Example 1 | Bal. | _18.70_ | 4.91 | 2.00 | 0.09 | 0 | 0 | 0.02 | 0.03 | 0 | 0 | 21.0 | _15.3_ |
| Comparative Example 2 | Bal. | 12.70 | 0.82 | 2.00 | 0.09 | 0 | 0 | 0.05 | 0.05 | 0 | 0 | _12.6_ | 28.8 |
| Comparative Example 3 | Bal. | 10.00 | 2.14 | 2.00 | 0.07 | 0 | 0 | 0.04 | 0.02 | 0 | 0 | _10.7_ | 28.6 |
| Comparative Example 4 | Bal. | 15.00 | 2.12 | 2.00 | 0.09 | _6.01_ | 0 | 0.04 | 0.05 | 0 | 0 | 20.5 | _11.5_ |
| Underlines indicate values outside the scope of the present invention. | | | | | | | | | | | | | |

[Production of additively manufactured shaped article]

Using the obtained Fe-based alloy powder for additive manufacturing as a raw material, an additive manufacturing method was carried out using a three-dimensional additive manufacturing apparatus (EOS-M280), thereby obtaining a rectangular parallelepiped additively manufactured shaped article having a large size (220 mm × 220 mm × 10 mm) (hereinafter referred to as the "non-heat-treated additively manufactured shaped article"). In Examples 1 to 11, no defects were observed during additive manufacturing or in the additively manufactured articles, and the desired additively manufactured shaped articles were obtained.

[Aging heat treatment]

The non-heat-treated additively manufactured shaped articles thus obtained were subjected to the following aging heat treatment.
In the aging heat treatment, the non-heat-treated additively manufactured shaped articles were held at 480 to 580°C for 5 hours and then air-cooled. In the Examples, by setting the aging heat-treatment temperature to 480 to 580°C, the aging hardness was adjusted to 46 HRC (±0.5 HRC).

[Thermal conductivity measurement]

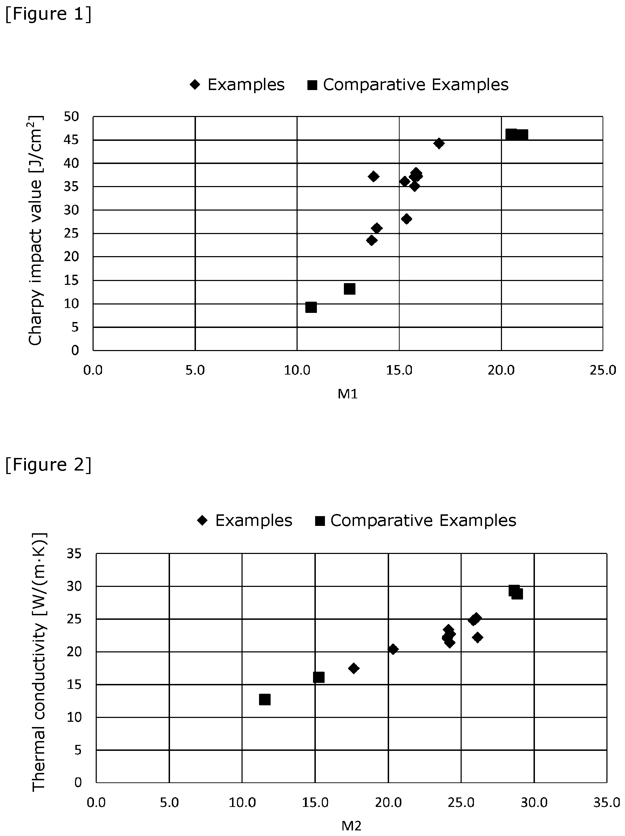

Thermal conductivity was measured by the laser flash method. The additively manufactured shaped articles after the aging heat treatment were finish-machined into disk-shaped specimens of 10 mm diameter and 1 mm thickness and used for thermal conductivity measurement. The results are shown in Table 2. A graph plotting thermal conductivity on the vertical axis and the M2 value defined by Formula (2) on the horizontal axis is shown in Figure 2.

[X-ray diffraction]

Samples were taken from the additively manufactured shaped articles before the aging heat treatment (non-heat-treated additively manufactured shaped articles), and X-ray diffraction patterns were measured using a commercially available X-ray diffractometer. Cu Kα radiation emitted from a Cu tube was used as the X-ray source. LaB$_6$ powder was used as a standard sample, and its X-ray diffraction pattern was also measured to allow correction for instrumental resolution.
The measurement conditions for X-ray diffraction were as follows:

X-ray source: Co tube (Cu Kα radiation)
Tube voltage: 50 kV
Tube current: 200 mA
Measurement angle: 35° to 140°
Measurement step width: 0.02°
Scan speed: 0.01°/sec

Using software attached to the X-ray diffractometer, background (baseline) removal and peak separation were performed on the obtained X-ray diffraction patterns. The full width at half maximum (FWHM) of the peak of the (110) plane of bcc iron was then determined. The obtained FWHM was corrected using the above formula, and it was evaluated whether the corrected FWHM was 0.140° or more. The results are shown in the FWHM column of Table 2. Peak separation was performed by fitting using a Lorentz function

[Charpy impact test]

To evaluate the toughness of the additively manufactured shaped articles after the aging heat treatment, 2-mm V-notched specimens (10 mm × 10 mm × 55 mm), which are JIS No. 4 test specimens, were prepared from the additively manufactured shaped articles after the aging heat treatment. Charpy impact test was conducted in accordance with JIS Z 2242:2018, and the average of three measurements was taken as the Charpy impact value. The results are shown in Table 2. A graph plotting the Charpy impact value on the vertical axis and the M1 value defined by Formula (1) on the horizontal axis is shown in Figure 1.

[Table 2]

|  | Charpy impact value [J/cm²] | Thermal conductivity [W/(m·K)] | FWHM (110) plane |
|---|---|---|---|
| Example 1 | 23.5 | 25.0 | 0.142 |
| Example 2 | 28.1 | 20.4 | 0.147 |
| Example 3 | 38.0 | 23.4 | 0.154 |
| Example 4 | 26.1 | 24.8 | 0.143 |
| Example 5 | 44.3 | 17.5 | 0.164 |
| Example 6 | 37.2 | 25.2 | 0.149 |
| Example 7 | 37.1 | 21.4 | 0.152 |
| Example 8 | 37.3 | 22.1 | 0.153 |
| Example 9 | 37.9 | 22.3 | 0.152 |
| Example 10 | 36.1 | 22.2 | 0.149 |
| Example 11 | 35.1 | 22.7 | 0.152 |
| Comparative Example 1 | 46.1 | <u>16.1</u> | 0.216 |
| Comparative Example 2 | <u>13.2</u> | 28.9 | <u>0.136</u> |
| Comparative Example 3 | <u>9.3</u> | 29.4 | <u>0.130</u> |
| Comparative Example 4 | 46.2 | <u>12.7</u> | 0.205 |
| Underlines indicate values outside the scope of the present invention. | | | |

When the content of a component is less than 0.01%, the value is shown as 0 in Table 1. Underlines in Tables 1 and 2 indicate values outside the scope of the present invention.

As shown in Tables 1 and 2, the additively manufactured shaped articles produced using the Fe-based alloy powders of Examples 1 to 11 exhibit excellent thermal conductivity of 17.5 W/(m·K) or more, and at the same time exhibit excellent cracking resistance (toughness) with Charpy impact values of 23.5 J/cm² or more. Thus, it can be understood that the additively manufactured shaped article consisting of the Fe-based alloy powder of the present invention has excellent properties with a well-balanced combination of properties suitable for a hot die-casting mold.

Although the Fe-based alloy powders of Examples 1 to 11 contain smaller amounts of alloying elements compared with general-purpose maraging steel containing large amounts of alloying elements, the additively manufactured shaped articles produced using these powders exhibit a martensitic structure after the aging treatment without requiring solution treatment. Since the amounts of alloying elements are suppressed in the additively manufactured shaped articles produced using the Fe-based alloy powders of Examples 1 to 11, the additively manufactured shaped articles exhibit large FWHM values and high dislocation density, resulting in excellent toughness and thermal conductivity. Among the Examples, those with larger FWHM values and higher dislocation density exhibit superior Charpy impact values and higher toughness, as shown in Table 2.

Comparative Example 1 contains excessive Ni, resulting in a low M2 value and poor thermal conductivity.

Comparative Examples 2 and 3 both have low M1 values and small FWHM values for the (110) plane of bcc iron, indicating low dislocation density, and therefore exhibit poor toughness.

Comparative Example 4 contains excessive Cr, resulting in a low M2 value and poor thermal conductivity.

As shown in Table 2, Figure 1, and Figure 2, the Comparative Examples exhibit properties biased toward either thermal conductivity or toughness, and therefore fail to sufficiently satisfy, in a well-balanced manner, both of the required properties demanded for a mold.

INDUSTRIAL APPLICABILITY

The Fe-based alloy powder of the present invention is suitable for metal additive manufacturing and is particularly suitable for producing a shaped article for a hot die-casting mold by additive manufacturing.

**Claims**

1. A Fe-based alloy powder for shaping, consisting of a Fe-based alloy,
   wherein the Fe-based alloy consists of, in mass%:

   Ni: 10.0 to 16.0%;
   Mo: 0.1 to 5.0%;
   Ti: 0.5 to 2.5%;
   Al: 0.01 to 1.00/0;
   Si: more than 0 to 0.8%;
   Mn: more than 0 to 0.8%;
   Cr: 0 to 6.00%;
   C: 0 to 0.10%;
   Co: 0 to 0.90%;
   Nb: 0 to 2.00%; and
   the balance being Fe and unavoidable impurities,
   wherein a value M1 is 13.0 or more,
   wherein the value M1 is defined by Formula (1):

$$M1 = [Ni] + 0.8[Cr] + 0.6[Mo] - 0.3[Ti] \qquad (1),$$

   wherein, in Formula (1), [Ni], [Cr], [Mo], and [Ti] respectively represent contents (mass%) of Ni, Cr, Mo, and Ti in the Fe-based alloy,
   wherein a value M2 is 17.0 or more,
   wherein the value M2 is defined by Formula (2):

$$M2 = 41.9 - 0.9[Ni] - 2.0[Mo] - 2.1[Cr] \qquad (2),$$

   and
   wherein, in Formula (2), [Ni], [Mo], and [Cr] respectively represent contents (mass%) of Ni, Mo, and Cr in the Fe-based alloy.

2. The Fe-based alloy powder for shaping according to claim 1, wherein the Fe-based alloy comprises one or more selected from the group consisting of Cr: more than 0 to 6.00%, C: 0.01 to 0.10%, Co: 0.01 to 0.90%, and Nb: 0.01 to 2.00%.

3. A shaped article produced by a shaping method using the Fe-based alloy powder for shaping according to claim 1 or 2.

4. The shaped article according to claim 3, wherein, in an X-ray diffraction pattern of the shaped article measured using Cu Kα radiation, the full width at half maximum of the peak of the (110) plane of bcc iron is 0.140° or more.

5. The shaped article according to claim 3 or 4, wherein the shaped article is an additively manufactured shaped article.

[Figure 1]

[Figure 2]

## INTERNATIONAL SEARCH REPORT

International application No.

**PCT/JP2024/032471**

### A. CLASSIFICATION OF SUBJECT MATTER

*B22F 1/00*(2022.01)i; *B22F 10/28*(2021.01)i; *B22F 10/34*(2021.01)i; *B22F 10/38*(2021.01)i; *B33Y 70/00*(2020.01)i; *B33Y 80/00*(2015.01)i; *C22C 38/00*(2006.01)i; *C22C 38/14*(2006.01)i; *C22C 38/52*(2006.01)i; *C21D 9/00*(2006.01)n
FI:   B22F1/00 T; B22F10/34; B22F10/28; B22F10/38; C22C38/00 302N; C22C38/52; C22C38/14; B33Y70/00; B33Y80/00; C22C38/00 304; C21D9/00 A

According to International Patent Classification (IPC) or to both national classification and IPC

### B. FIELDS SEARCHED

Minimum documentation searched (classification system followed by classification symbols)

B22F1/00; B22F10/00-10/85; B22F3/16; B22F3/105; B33Y70/00; B33Y80/00; C22C38/00-38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2023/061722 A1 (SANDVIK MACHINING SOLUTIONS AB) 20 April 2023 (2023-04-20) claims, table 1 | 1-5 |
| A | JP 2022-148950 A (SANYO SPECIAL STEEL CO., LTD.) 06 October 2022 (2022-10-06) entire text | 1-5 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **30 October 2024** | **12 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**
Information on patent family members

International application No.

**PCT/JP2024/032471**

| Patent document cited in search report | | | Publication date (day/month/year) | Patent family member(s) | | | Publication date (day/month/year) |
|---|---|---|---|---|---|---|---|
| WO | 2023/061722 | A1 | 20 April 2023 | EP claims, table 1 CN | 4166259 118055816 | A1 A | |
| JP | 2022-148950 | A | 06 October 2022 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008081840 A
- JP 6703511 B
- JP 2020045567 A
- JP 6692339 B